# EUROPEAN PATENT SPECIFICATION

(11) **EP 1 363 713 B1**
(45) Date of publication and mention of the grant of the patent: **11.07.2012**
(21) Application number: 01908181.9
(22) Date of filing: 01.03.2001
(51) Int. Cl.: A63F 13/08

(54) **ENTERTAINMENT DEVICE AND METHOD OF OPERATION THEREOF**
UNTERHALTUNGVORRICHTUNG UND ENTSPRECHENDE BEDIENUNGSMETHODE
DISPOSITIF DE DIVERTISSEMENT ET PROCEDE DE FONCTIONNEMENT CORRESPONDANT

(43) Date of publication of application: 26.11.2003
(73) Proprietor: Sony Computer Entertainment Inc., Tokyo 107-0052 (JP)
(72) Inventor: AKAZAWA, Toru, Sony Computer Entertainment Inc., Tokyo 107-0052 (JP)
(74) Representative: Hedley, Nicholas James Matthew
(86) International application number: PCT/JP2001/001550
(87) International publication number: WO 2002/070090

(56) References cited:
- EP-A- 0 501 456
- US-A- 4 202 038
- US-A- 4 695 739
- US-A- 5 140 178
- Intel: "ATX 2.01 Specification", , 1 February 1997 (1997-02-01), Retrieved from the Internet: URL:http://joule.bu.edu/~hazen/LinuxCluste r/atx_201.pdf [retrieved on 2005-10-19]

## Description

### FIELD OF THE INVENTION

This invention concerns an entertainment device and an operation method of the entertainment device, in which multiple kinds of operations, for example operations of power off and reset, are done in common with the operation part of the entertainment device.

### BACKGROUND OF THE INVENTION

Heretofore in an entertainment device, if there are many individual operation parts, they each have charge of a single function, for example, turning the power on and off is done with a power switch, and the reset function is done with a reset switch, and the power switch and reset switch have been provided separately.

But in recent years, entertainment devices have been made increasingly smaller while being given more functions to perform. This has made it unavoidable to add operation units related to the new functions, despite the smaller surface area of the entertainment device main body. This has created a demand to reduce the operation units as much as possible even though main body of the entertainment device is made smaller and new functions have been added to the entertainment device.

EP-A-0501456 describes a video game computer; games controllers are connected to the computer and can provide an input into the computer.

### SUMMARY OF THE INVENTION

Thus the object of this invention is to provide an entertainment device that accepts multiple kinds of operation instructions with the same operation unit, and an operation method of such entertainment device.

The above and other objects of the present invention are attained by an entertainment device and method as set out in the accompanying claims.

### BRIEF DESCRIPTION OF THE DRAWINGS

Figure 1 is a perspective view of the entertainment device of the present invention;
Figure 2 is a block diagram of the entertainment device of the invention;
Figure 3 is a flowchart showing an example of the power source control procedure;
Figure 4 is a flowchart showing another example of the power source control procedure;
Figure 5 is a flowchart showing still another example of the power source control procedure; and
Figure 6 is a flowchart showing yet another example of the power source control procedure.

### DETAILED DESCRIPTION OF THE PREFERRED EMBODIMENTS

In the following, using the drawings, the embodiments of this invention will be described. The explanation is given by taking as an example an entertainment device that is capable of games, video playback, audio playback, communication, etc.

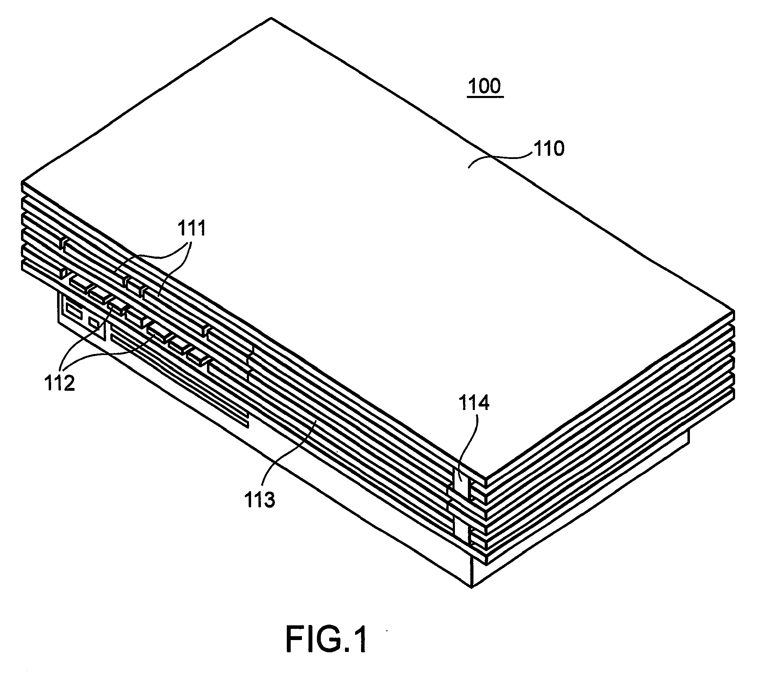

Figure 1 shows a perspective view of the entertainment device 100 of an embodiment. Entertainment device 100 is housed in a cabinet 110. Arranged on the front surface of cabinet 110 are memory card insertion holes 111, controller insertion holes 112, a retractable disk tray 113, and a push switch (hereafter also called simply "switch") 114. Here, the user of the entertainment device 100 can operate push switch 114 on the front surface of cabinet 110 as an operation to the operation reception means; specifically, he can perform a push-in operation on push switch 114.

In Figure 1, push switch 114 is used as a means for receiving operation instructions from outside, but it is not limited to this. For example, the switch may be a touch switch or touch panel, etc.

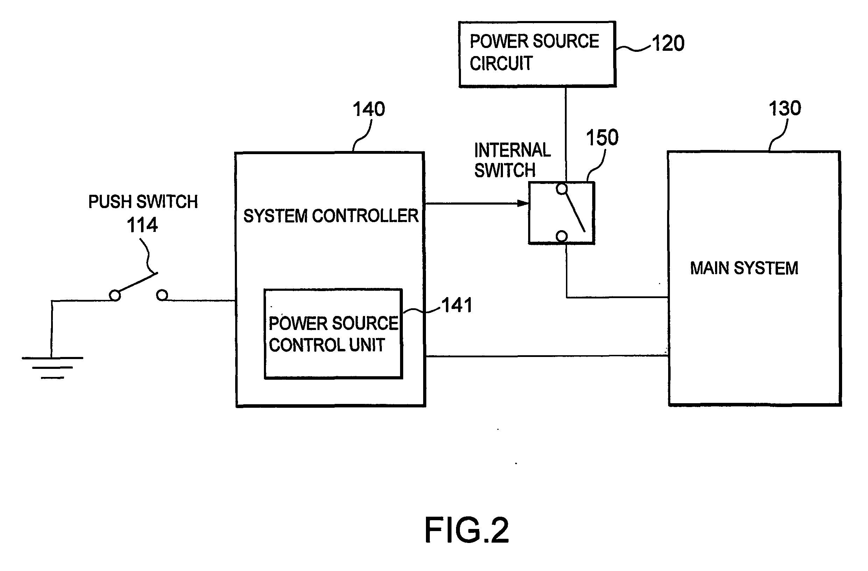

Referring to Figure 2, the internal composition of entertainment device 100 shown in Figure 1 will be now described.

Figure 2 is a functional block diagram of entertainment device 100 of this embodiment. The example shown in Figure 2 is one for describing an example in which push switch 114 is shared with a power switch and a reset switch.

Entertainment device 100 shown in Figure 2 has at least a power circuit 120, a main system 130 that provides entertainment functions to the user, a push switch 114 that receives operation instructions from outside, a system controller 140 that controls the operation state of main system 130, and an internal switch 150 that decides whether to turn the power of main system 130 on or off.

System controller 140 has a power control unit 141 which performs power control of main system 130.

Push switch 114 is connected to system controller 140, and signals that indicate the operation state of push switch 114 are transmitted to system controller 140. That is, pushing grounded push switch 114 causes [the voltage of] the terminal (not shown) of system controller 140 that is connected to push switch 114 to go down to the ground level.

Power circuit 120 is connected to, and supplies power to, system controller 140 and, via internal switch 150, main system 130.

System controller 140 is also connected to internal switch 150 and controls turning the power to main system 130 on and off. System controller 140 is also connected to main system 130 and can send a reset signal to main system 130.

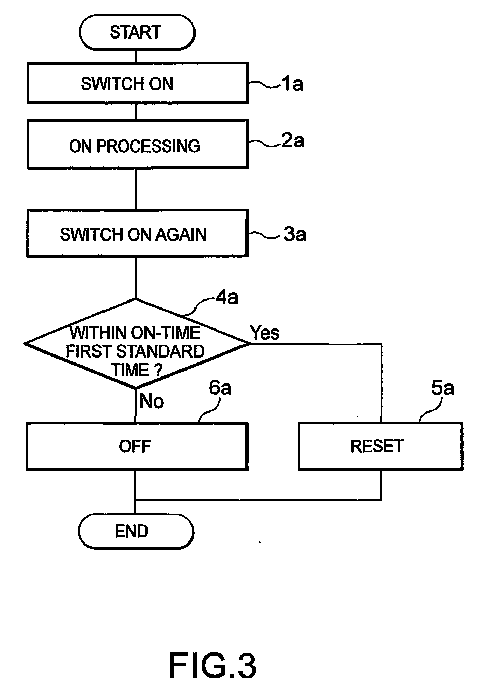

Referring to Figure 3, a first embodiment of the power control procedure will be described.

When push switch 114 is pressed while the power of main system 130 is off (step 1a), system controller 140 detects the signal, a power-on signal is output to internal switch 150 by power control unit 141 (step 2a), and power is supplied to main system 130.

When push switch 114 is pressed again while power is being supplied to main system 130 (step 3a), power control unit 141 measures the time during which switch 114 is being pressed. Then it is judged whether the time during which this switch 114 continues to be pressed is long or short (step 4a). While the time during which switch 114 is continuously pressed since the beginning of the measurement remains less than a first standard time, if switch 114 is released, a reset signal is transmitted to main system 130 (step 5a). If the time during which switch 114 is pressed, exceeds the predetermined first standard time, a power-off signal for main system 130 is sent to internal switch 150 (step 6a).

In this way, a single switch is given two functions: power on/off, and reset.

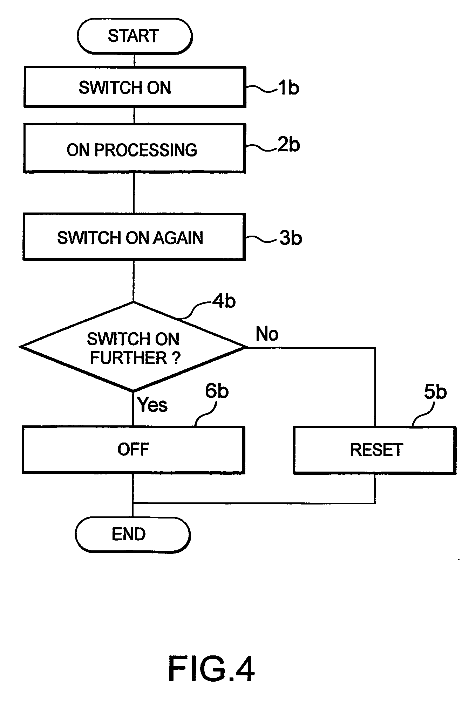

In the above described embodiment, the decision between power-off and reset is made by the length of the time during which the push switch continues to be pressed, but this invention is not limited to this effect. For example, the decision may be made by the number of times the switch is pressed within a prescribed time period. Specifically, for example, the power on signal is output (step 2b) as a measurement of the time beginning (step 1b) when the switch is first pressed as shown in Figure 4. After this, if the number of times it is pressed within the prescribed time period is once (step 3b), a reset may be done (steps 4b, 5b), and if that member is two, a power-off (steps 4b, 6b) may be done.

Also, if after reset there is no operation input to entertainment device 100 for a fixed period of time or longer, the power may be turned off. For example, the following may be done.

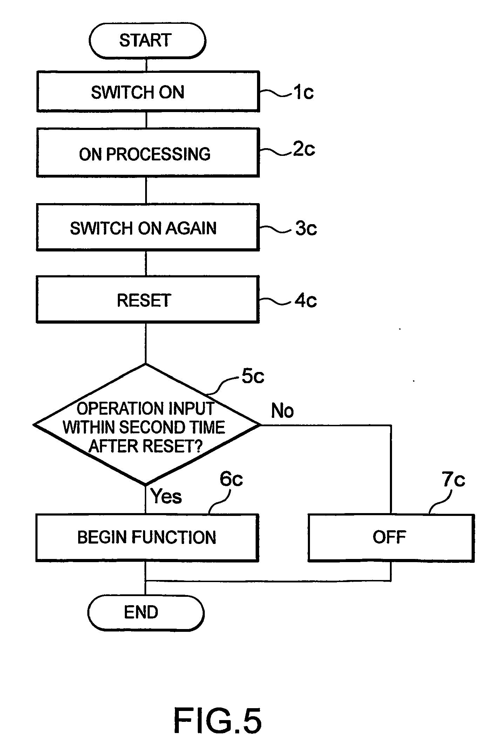

That is, in Figure 5, the operation is the same from step 1c to step 3c as from step 1a to step 3a in Figure 3, but if, after completion of the reset of main system 130 (step 4c), the user of entertainment device 100 makes some operation input to entertainment device 100 (step 5c), main system 130 reports the start of an entertainment function to power control unit 141 (step 6c). On the other hand, power control unit 141, after transmitting a reset signal, measures the elapsed time since when it was transmitted. And if no entertainment function start report is received from main system 130 even after a second standard time has elapsed, power control unit 141 transmits a power-off signal to internal switch 150 (step 7c). In this case, the power is turned off even if in step 4c the user intends to turn the power off but actually only did a reset, and the power is not turned off and is left as is.

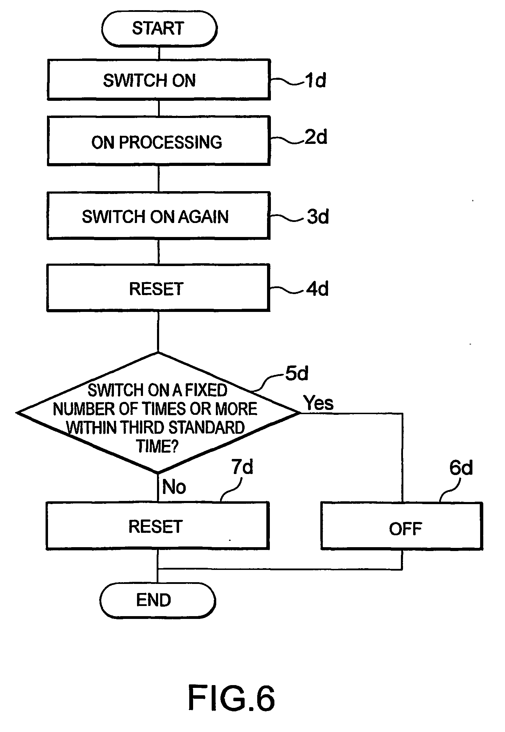

Moreover, if switch 114 is repeatedly pressed, the power may be turned off if the number of times it is pressed within a fixed time period reaches a fixed number of times. This is because one can conceive of cases in which a user repeating the reset operation many times means that he is not familiar with how to use entertainment device 100, so although he wants to turn the power off, he cannot. That is, the operation steps 1d to 4d in Figure 6 are the same as steps 1c to 4c in Figure 5, but a power off signal is output to internal switch 150 (step 6d) if, after outputting a reset signal to main system 130 (step 4d), power control unit 141 outputs a reset signal a predetermined standard number of times or more within a third standard time (step 5d).

In the examples shown in Figure 2 to Figure 6 the sharing of the power switch and reset switch by push switch 114 has been described. In these embodiments, as an example of the sharing of multiple functions by a single switch, the two functions of turning the power off and resetting are shared by the push switch. In addition, rather than making a simple selection, etc. of the two functions, the two functions are controlled by providing a priority and conditions for the two functions under fixed conditions according to how the switch is operated. Therefore, in the examples of Figure 2 to Figure 6, various modification examples can be applied as necessary according to the priority and conditions of these functions.

Moreover, the object of this invention is to share multiple functions by a single switch and to control multiple functions by providing a priority and conditions for multiple functions under fixed conditions according to how a switch is operated, and application examples can exist concerning the type of switch, the number and types of functions, the priority and conditions for the functions, and many other modifications.

In this way the present invention makes it possible to provide an entertainment device that receives operation instructions of multiple kinds with the same operation unit.

## Claims

1. An entertainment device comprising:
a main system (130),
a push switch (114) that provides operation instructions to said operation unit (140) by a user, from outside of the entertainment device, pushing said push switch (114);
an operation unit (140) that is connected to the push switch (114) and that is configured to receive said operation instructions from the push switch (114);
a decision unit (141) that comprises a control unit (141) that is configured to receive signals from said operation unit (140) and to control an operation state of said main system (130);
a switch (150) that is configured to turn a power supply to the main system (130) on or off based on instructions from said control unit (141),
wherein said decision unit (141) and said control unit (141) are configured to decide, when power is being supplied to said main system (130), whether to output to said power supply switch (150) a signal instructing that the power supply be turned off, or whether to output to said main system (130) a signal giving a reset instruction is obtained as follows: if a second operation of said push switch (114) occurs, a signal giving a reset instruction is output to said main system (130), and if there is an operation of said push switch a prescribed number of times or more within a third standard time after the second operation of said push switch, a signal instructing that the power supply be turned off is output to said power supply switch (150).

2. A method of operating an entertainment system including an operation unit (140), a control unit (141), a main system (130), a push switch (114), and a switch (150), the operation method comprising the steps of:
providing an operation instruction to the operation unit (140) from outside of the entertainment system by said push switch (114).;
receiving signals from said operation unit (140) and controlling by means of the control unit (141) an operation state of the main system, and
deciding whether to turn a power supply to said main system (130) on or off by the switch (150) based on instructions from said control unit (141), wherein said decision is taken as follows: if a second operation of said push switch (114) occurs, a signal giving a reset instruction is output to said main system (130), and if there is an operation of said push switch (114) a prescribed number of times or more within a third standard time after the second operation of said push switch, a signal instructing that the power supply be turned off is output to said power supply switch (150).

## Patentansprüche

1. Unterhaltungsgerät mit:
einem Hauptsystem (130),
einem Druckschalter (114), der der Betätigungseinheit (140) Betätigungsbefehle von einem Benutzer liefert, der den Druckschalter (114) an der Außenseite des Unterhaltungsgeräts drückt;
einer Betätigungseinheit (140), die mit dem Druckschalter (114) verbunden und konfiguriert ist, um die Betätigungsbefehle vom Druckschalter (114) zu empfangen;
einer Entscheidungseinheit (141), die eine Steuereinheit (141) aufweist, welche konfiguriert ist, um Signale von der Betätigungseinheit (140) zu empfangen und einen Betätigungszustand des Hauptsystems (130) zu steuern;
einem Schalter (150), der konfiguriert ist, um eine Stromversorgung an das Hauptsystem (130) basierend auf Befehlen von der Steuereinheit (141) ein- oder auszuschalten,
wobei die Entscheidungseinheit (141) und die Steuereinheit (141) konfiguriert sind, um zu entscheiden, wenn Strom an das Hauptsystem (130) geliefert wird, ob ein Signal, das anweist, dass die Stromversorgung auszuschalten ist, an den Stromversorgungsschalter (150) auszugeben ist, oder ob ein Signal, das einen Reset-Befehl gibt, an das Hauptsystem (130) auszugeben ist, wie folgt: wenn eine zweite Betätigung des Druckschalters (114) stattfindet, wird an das Hauptsystem (130) ein Reset-Befehl ausgegeben, und wenn der Druckschalter innerhalb einer dritten Standardzeit nach der zweiten Betätigung des Druckschalters mit einer vorgegebenen Häufigkeit oder öfter betätigt wird, wird an den Stromversorgungsschalter (150) ein Signal ausgegeben, das anweist, dass die Stromversorgung auszuschalten ist.

2. Verfahren zum Betreiben eines Unterhaltungssystems mit einer Betätigungseinheit (140), einer Steuereinheit (141), einem Hauptsystem (130), einem Druckschalter (114) und einem Schalter (150), wobei das Betriebsverfahren die folgenden Schritte umfasst:
Liefern eines Betätigungsbefehls an die Betätigungseinheit (140) von der Außenseite des Unterhaltungssystems durch den Druckschalter (114);
Empfangen von Signalen von der Betätigungseinheit (140) und Steuern des Betätigungszustands des Hauptsystems mittels der Steuereinheit (141), und
Entscheiden, ob eine Stromzufuhr an das Hauptsystem (130) durch den Schalter (150) ein- oder auszuschalten ist, basierend auf Befehlen von der Steuereinheit (141), wobei die Entscheidung wie folgt getroffen wird: wenn eine zweite Betätigung des Druckschalters (114) stattfindet, wird an das Hauptsystem (130) ein Reset-Befehl ausgegeben, und wenn der Druckschalter (114) innerhalb einer dritten Standardzeit nach der zweiten Betätigung des Druckschalters mit einer vorgegebenen Häufigkeit oder öfter betätigt wird, wird an den Stromversorgungsschalter (150) ein Signal ausgegeben, das anweist, dass die Stromversorgung auszuschalten ist.

## Revendications

1. Dispositif de divertissement comprenant :
un système principal (130),
un bouton-poussoir (114) qui fournit des instructions d'actionnement à ladite unité d'actionnement (140) par un utilisateur, depuis l'extérieur du dispositif de divertissement, en appuyant sur ledit bouton-poussoir (114) ;
une unité d'actionnement (140) qui est connectée au bouton-poussoir (114) et qui est configurée pour recevoir lesdites instructions d'actionnement depuis le bouton-poussoir (114) ;
une unité de décision (141) qui comprend une unité de commande (141) qui est configurée pour recevoir des signaux de ladite unité d'actionnement (140) et pour commander un état d'actionnement dudit système principal (130) ;
un commutateur (150) qui est configuré pour allumer ou éteindre une alimentation électrique vers le système principal d'après des instructions en provenance de ladite unité de commande (141),
dans lequel ladite unité de décision (141) et ladite unité de commande (141) sont configurées pour décider, lorsque l'électricité est fournie audit système principal (130), de fournir en sortie audit commutateur d'alimentation électrique (150) un signal informant que l'alimentation électrique doit être éteinte, ou de fournir en sortie audit système principal (130) un signal donnant une instruction de réinitialisation, comme suit : si un second actionnement dudit bouton-poussoir (114) a lieu, un signal donnant une instruction de réinitialisation est fourni en sortie audit système principal (130) et s'il y a un actionnement dudit bouton-poussoir un nombre de fois prescrit ou plus dans un troisième temps standard après le second actionnement dudit bouton-poussoir, un signal informant que l'alimentation électrique doit être éteinte est fourni en sortie audit commutateur d'alimentation électrique (150).

2. Procédé consistant à actionner un système de divertissement comprenant une unité d'actionnement (140), une unité de commande (141), un système principal (130), un bouton-poussoir (114), et un commutateur (150), le procédé d'actionnement comprenant les étapes consistant à :
fournir une instruction d'actionnement à l'unité d'actionnement (140) depuis l'extérieur du système de divertissement par ledit bouton-poussoir (114) ;
recevoir des signaux en provenance de ladite unité d'actionnement (140) et commander au moyen de l'unité de commande (141) un état d'actionnement du système principal, et
décider d'allumer ou d'éteindre une alimentation électrique vers ledit système principal (130) par le commutateur (150) d'après des instructions en provenance de ladite unité de commande (141), dans lequel ladite décision est prise comme suit : si un second actionnement dudit bouton-poussoir (114) a lieu, un signal donnant une instruction de réinitialisation est fourni en sortie audit système principal (130), et s'il y a un actionnement dudit bouton-poussoir (114) un nombre de fois prescrit ou plus dans un troisième temps standard après le second actionnement dudit bouton-poussoir, un signal informant que l'alimentation électrique doit être éteinte est fourni audit commutateur d'alimentation électrique (150).
